# EUROPEAN PATENT APPLICATION

(11) **EP 4 625 859 A1**
(43) Date of publication of application: **01.10.2025**
(21) Application number: 25158867.9
(22) Date of filing: 19.02.2025
(51) Int. Cl.: H04L 1/00, H04L 1/04, H04L 5/00

(54) **SEGMENT PARSER FOR MULTIPLE RESOURCE UNIT (MRU) OPERATIONS**

(30) Priority: 27.03.2024 US 202418618291
(71) Applicant: NXP USA, Inc., Austin, TX 78735 (US)
(72) Inventor: CHANG, Chao-Wei, 5656AG Eindhoven (NL); WONG, Sai Man Simon, 5656AG Eindhoven (NL)
(74) Representative: Hardingham, Christopher Mark

(57) **Abstract**

Embodiments of a segment parser, a wireless transmitter, and a method for operating a segment parser are disclosed. In an embodiment, a segment parser includes a controller configured to track a data subcarrier allocation pattern of a multiple resource unit (MRU) and a rate matching buffer configured to balance data throughput based on the data subcarrier allocation pattern of the MRU.

## Description

### BACKGROUND

Multiple Resource Unit (MRU) is a new mandatory feature introduced in an Institute of Electrical and Electronics Engineer (IEEE) 802.11 802.11be standard, which allows multiple resource units (MRUs) being allocated to a single user or client. This feature can enable more efficient spectrum utilization in WiFi 7 system. MRUs can be categorized into small size MRUs and large size MRUs. However, a large size MRU can span across multiple frequency bands. Therefore, distributing bit streams of an MRU from an upper stream functional block stream parser to multiple frequency segments can be challenging.

### SUMMARY

Embodiments of a segment parser, a wireless transmitter, and a method for operating a segment parser are disclosed. In an embodiment, a segment parser includes a controller configured to track a data subcarrier allocation pattern of a multiple resource unit (MRU) and a rate matching buffer configured to balance data throughput based on the data subcarrier allocation pattern of the MRU. Other embodiments are also disclosed.

In an embodiment, the segment parser is included in a wireless transmitter of a wireless device.

In an embodiment, the wireless device is compatible with an Institute of Electrical and Electronics Engineers (IEEE) 802.11 protocol.

In an embodiment, the controller includes a counter.

In an embodiment, the controller includes a finite state machine (FSM).

In an embodiment, the MRU includes resource units (RUs) of different numbers of data subcarriers.

In an embodiment, the MRU includes a first RU having 996 data subcarriers and a second RU having 448 data subcarriers or 726 data subcarriers.

In an embodiment, the controller is further configured to distribute data of the MRU to low-density parity-check (LDPC) tone mappers in a data rate that is determined by a ratio between the numbers of data subcarriers of the RUs in the MRU.

In an embodiment, the controller is further configured to control an allocation of data of the MRU to be sent to a respective LDPC tone mapper and to determine a memory address for storing the data of the MRU.

In an embodiment, the controller is further configured to control the rate matching buffer to store data from a stream parser and to send stored data to a respective LDPC tone mapper.

In an embodiment, the rate matching buffer is further configured to latch residual bits at different output rates between LDPC tone mappers.

In an embodiment, the rate matching buffer includes a 12-bit rate matching buffer to support up to 4096 quadrature amplitude modulation (QAM).

In an embodiment, a wireless transmitter includes scramblers configured to perform scramble operations on input data to generate scrambled input data, at least one LDPC encoder configured to perform an encoding operation on the scrambled input data to generated encoded data, a bit alignment unit configured to perform a bit alignment operation on the encoded data to generate aligned data, a stream parser configured to perform a stream parser operation on the aligned data to generate data streams, segment parsers, where at least one of the segment parsers includes a controller configured to track a data subcarrier allocation pattern of an MRU that correspond to the data streams and a rate matching buffer configured to balance data throughput based on the data subcarrier allocation pattern of the MRU, and LDPC tone mappers configured to perform a tone mapping operation based on the data throughput from the segment parsers.

In an embodiment, the wireless transmitter is compatible with an IEEE 802.11 protocol.

In an embodiment, a method for operating a segment parser involves using a counter or a FSM of the segment parser, tracking a data subcarrier allocation pattern of an MRU and using a rate matching buffer of the segment parser, balancing data throughput based on the data subcarrier allocation pattern of the MRU.

In an embodiment, the segment parser is included in a wireless transmitter of a wireless device.

In an embodiment, the wireless device is compatible with an IEEE 802.11 protocol.

In an embodiment, the MRU includes RUs of different numbers of data subcarriers.

In an embodiment, the MRU includes a first RU having 996 data subcarriers and a second RU having 448 data subcarriers or 726 data subcarriers.

In an embodiment, using the counter or the FSM of the segment parser, tracking the data subcarrier allocation pattern of the MRU includes distributing data of the MRU to LDPC tone mappers in a data rate that is determined by a ratio between the numbers of data subcarriers of the RUs in the MRU.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts a wireless transmitter that can be used by a wireless device.
Fig. 2 depicts a wireless transmitter in accordance with an embodiment of the invention.
Fig. 3 depicts a table of NOB (number of bit) for different types of modulations.
Fig. 4 shows the case of a 160 Megahertz (MHz) signal with an MRU of 996+484-tone (i.e., 996+484 subcarriers) that the wireless transmitter depicted in Fig. 2 can process.
Fig. 5 shows the case of a 160MHz signal with an MRU with 996+484+242-tone (i.e., 996+726 subcarriers) that the wireless transmitter depicted in Fig. 2 can process.
Fig. 6 depicts a stream parser, one or more segment parsers, and a number of low-density parity-check (LDPC) tone mappers processing an RU of 996+996-tone (i.e., 996+996 subcarriers).
Fig. 7 depicts a stream parser, one or more segment parsers, and a number of LDPC tone mappers processing an MRU of 996+484-tone (i.e., 996+484 subcarriers).
Fig. 8 depicts a stream parser, one or more segment parsers, and a number of LDPC tone mappers processing an MRU of 996+726-tone (i.e., 996+726 subcarriers).
Fig. 9 depicts a table of an example for serial data flow of a RU996+484-tone (i.e., 996+484 subcarriers) MRU.
Fig. 10 depicts a table of an example for serial data flow of a RU996+484+242-tone (i.e., 996+726 subcarriers) MRU.
Fig. 11 depicts a wireless device in accordance with an embodiment of the invention.
Fig. 12 is a process flow diagram of a method for operating a segment parser in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

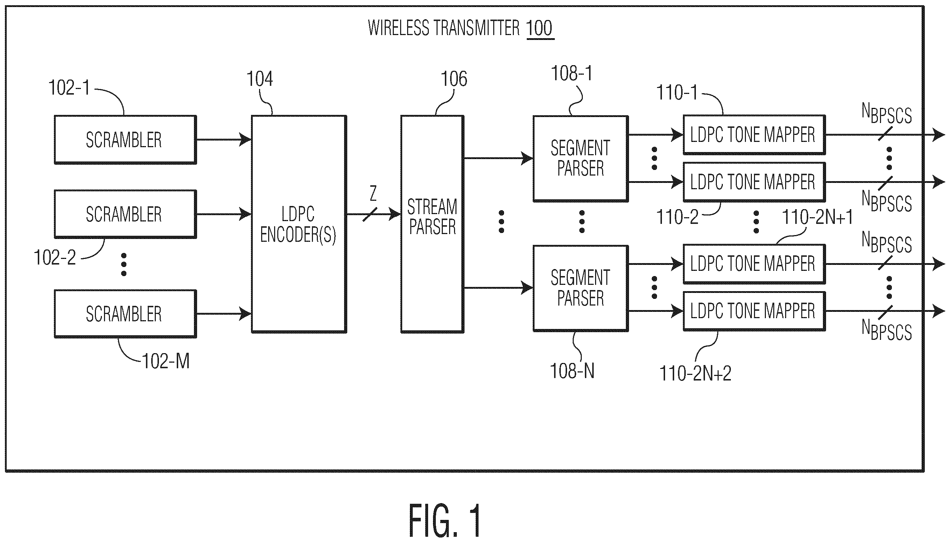

Fig. 1 depicts a wireless transmitter 100 that can be used by, for example, a wireless device that is compatible with an Institute of Electrical and Electronics Engineer (IEEE) 802.11 standard. As depicted in Fig. 1, the wireless transmitter 100 includes one or more scramblers 102-1, ..., 102-M, where M is a positive integer, at least one low-density parity-check (LDPC) encoder 104, a stream parser 106, one or more segment parsers 108-1, ..., 108-N, where N is a positive integer, and a number of LDPC tone mappers 110-1, 110-2, ..., 110-2N+1, 110-2N+2. Multiple Resource Unit (MRU) is a new mandatory feature introduced in an Institute of Electrical and Electronics Engineer (IEEE) 802.11 802.11be standard, which allows multiple resource units (RUs) being allocated to a single user or client. This feature can enable more efficient spectrum utilization in WiFi 7 system. MRUs can be categorized into small size MRUs and large size MRUs. For example, a small size MRU contains one or two small single resource units with a number of allocated tones that is less than 242-subcarrier (also can be referred to as 242-tone). Two small size MRUs defined in an IEEE 802.11be standard include 52+26-tone and 106+26-tone, each of which does not have design implications for a segment parser (e.g., the segment parsers 108-1, ..., 108-M depicted in Fig. 1) because these small size MRUs fit into one of the 80 Megahertz (MHz) segments completely, the subcarriers or tones allocated to these small size MRUs do not spread across multiple 80MHz frequency segments. One functionality of a segment parser (e.g., the segment parsers 108-1, ..., 108-M depicted in Fig. 1) is to distribute bit streams from the upper stream functional block (i.e., the stream parser 106) to two or more 80MHz frequency segments (e.g., the LDPC tone mappers 110-1, 110-2, ..., 110-2N+1, 110-2N+2 as shown in Fig. 1). One of the large size MRUs, such as a 484+242-tone MRU is similar to a small size MRU and has all its allocated tones confined within an 80MHz segment. However, other large size MRUs, such as MRUs with 996+484-tone, 996+484+242-tone, 2x996+484-tone, 3x996-tone or 3x996+484-tone, span across multiple 80MHz frequency bands. Segment parser design needs to be modified or even redesigned in a wireless communications system (e.g., a WiFi 7 system) to handle these large size MRUs. Most of all, those MRUs with unequal number of subcarriers (also referred to as tones) allocated to different 80MHz segments, such as, 996+484-tone and 996+484+242-tone MRUs, present challenges to the reusability of existing design and may introduce significant silicon area growth. As shown in Fig. 1, the segment parsers 108-1, ..., 108-N are located between the LDPC encoder 104 and the LDPC tone mappers 110-1, 110-2, ..., 110-2N+1, 110-2N+2 in the transmitter data path. Between the LDPC encoder and the segment parsers, the stream parser 106 distributes data bits output from the LDPC encoder, which is Z bits per clock cycle, where Z denotes the subblock size of a LDPC codeword. The possible values of Z are 81, 54 and 27 based on IEEE 802.11 WiFi standard. The LDPC tone mappers 110-1, 110-2, ..., 110-2N+1, 110-2N+2 are located on the downstream side of the segment parsers 108-1, ..., 108-N, in which a memory (e.g., static random-access memory (SRAM)) is used as a wide buffer to store data subcarriers per symbol for facilitating the implementation of LDPC tone mapping operation. Typically, this SRAM is shared with binary convolutional code (BCC) case in design practice to minimize silicon area/footprint. The word size of SRAM may be chosen to be multiple of 13. However, this design framework can create a complicated multiplexer (MUX) structure within a stream parser and a segment parser. Several problems can be caused by this large and complicated MUX structure, including large circuitry area and a hot spot of congestion in place and route physical design phase. In addition, special handling is required to deal with different MRUs, especially when the number of occupied data subcarriers in different segments are unequal. These problems prohibit a unified design across different size of MRUs and limit the design extension for standard evolution in the future.

In accordance with an embodiment of the invention, elastic internal data bus width from an LDPC encoder(s) output to an LDPC tone mapper output is devised in order to simplify the stream parser and the segment parser logic. Specifically, a counter or a finite state machine (FSM) is created within a segment parser to track the bit allocation patterns over time to different frequency segments assigned with different number of data subcarriers according to the MRU size. In addition, a small rate matching buffer is designed to balance different inputs and output rates for different segments through a segment parser. A unified segment parser architecture with a counter or a finite state machine (FSM) and a rate matching buffer works for all RUs and MRUs without special handling for any of the cases and provides an efficient implementation to distribute data bits from LDPC encoder outputs across all frequency segments for large size MRUs, for example, based on an IEEE 802.11be standard. The hardware design for a unified segment parser architecture consumes much smaller silicon area due to less complicated logic and narrower memory bit-width, compared to a segment parser without a unified architecture. In addition, it is also more flexible to add new modes due to the unified architecture.

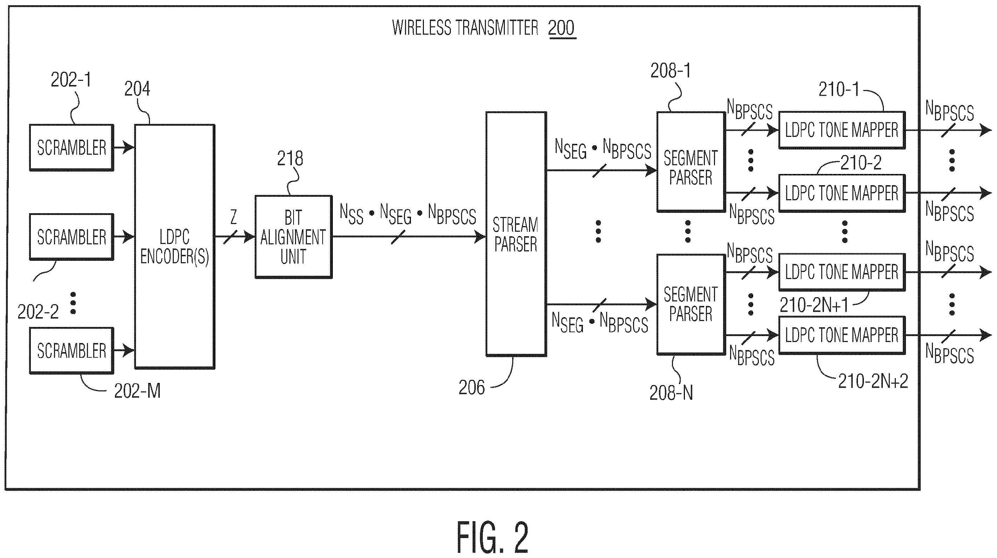

Fig. 2 depicts a wireless transmitter 200 in accordance with an embodiment of the invention. In the embodiment depicted in Fig. 2, the wireless transmitter 200 includes one or more scramblers 202-1, ..., 202-M, where M is a positive integer, at least one low-density parity-check (LDPC) encoder 204, a bit alignment unit 218, a stream parser 206, one or more segment parsers 208-1, ..., 208-N, where N is a positive integer, and a number of LDPC tone mappers 210-1, 210-2, ..., 210-2N+1, 210-2N+2. The wireless transmitter 200 can be used in various applications, such as industrial applications, medical applications, computer applications, and/or consumer or appliance applications. In some embodiments, the wireless transmitter 200 is included in a wireless communications device, such as a wireless communications device compatible with an Institute of Electrical and Electronics Engineers (IEEE) 802.11 protocol. Although the depicted wireless transmitter 200 is shown in Fig. 2 with certain components and described with certain functionality herein, other embodiments of the wireless transmitter 200 may include fewer or more components to implement the same, less, or more functionality. For example, although the wireless transmitter 200 is shown in Fig. 2 includes the LDPC encoder 204, in other embodiments, the wireless transmitter 200 includes multiple LDPC encoders. In another example, although the wireless transmitter 200 is shown in Fig. 2 as being connected in a certain topology, the network topology of the wireless transmitter 200 is not limited to the topology shown in Fig. 2. In some embodiments, the scramblers 202-1, ..., 202-M are configured to perform scramble operations on input data to generate scrambled input data, the at least one LDPC encoder 204 is configured to perform an encoding operation on the scrambled input data to generated encoded data, the bit alignment unit 218 is configured to perform a bit alignment operation on the encoded data to generate aligned data, and the stream parser 206 is configured to perform a stream parser operation on the aligned data to generate data streams. In these embodiments, at least one of the segment parsers includes a controller configured to track a data subcarrier allocation pattern of a multiple resource unit (MRU) that correspond to the data streams and a rate matching buffer configured to balance data throughput based on the data subcarrier allocation pattern of the MRU. The LDPC tone mappers 210-1, 210-2, ..., 210-2N+1, 210-2N+2 may be configured to perform a tone mapping operation based on the data throughput from the segment parsers.

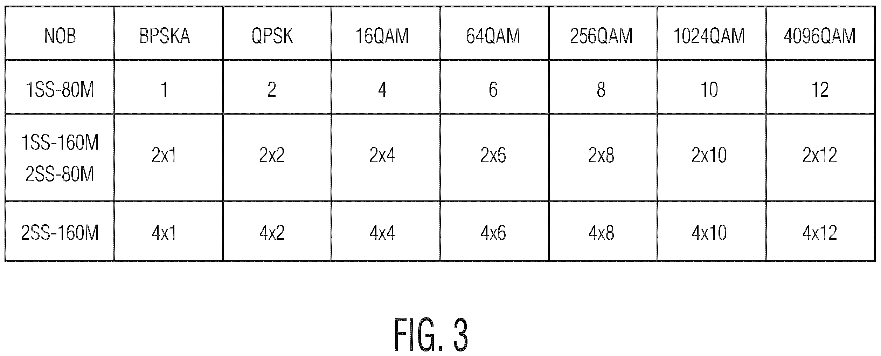

In the embodiment depicted in Fig. 2, the bit alignment unit 218 is located between the LDPC encoder(s) 204 and the stream parser 206 and configured to receive Z bits of encoded data from the LDPC encoder(s) 204 and output NOB (number of bit) bits to the stream parser 206 based on the number of streams (Nss), the number of segments (NSEG), and the number of bit per subcarrier per stream (NBPSCS) of a physical layer protocol data unit (PPDU). For example, the Number of bit (NOB) for the stream parser input is equal to the product of the number of streams (Nss), the number of segments (NSEG), and the number of bit per subcarrier per stream (NBPSCS) of a PPDU, which is represented as (NSS˙NSEG˙NBPSCS). Fig. 3 depicts a table of NOB (number of bit) for different types of modulations, ranging from Binary Phase-shift keying (BPSK) to 4096-quadrature amplitude modulation (QAM). As shown in Fig. 3, the Number of bit (NOB) for the stream parser input, which is the product of the number of streams (Nss), the number of segments (NSEG), and the number of bit per subcarrier per stream (NBPSCS) of a PPDU (NSS˙NSEG˙NBPSCS), is listed for different modulation types.

In some embodiments, the stream parser 206 allocates a block of s bits alternately from an incoming bit stream to different spatial streams in a round robin fashion in equal Modulation Coding Scheme (MCS) cases, each spatial stream having a block of NCBPSS bits per Orthogonal frequency division multiplexing (OFDM) symbol. For example, s represents the number of bits assigned to the real or imaginary part of a constellation point. In some embodiments, the bit width of the data bus from the stream parser 206 to the segment parser 208-1, ..., or 208-N is dynamically adapted on per packet per symbol basis (e.g., the bit width of data bus is proportional to the number of segments and the number of bits per sub-carrier per stream, i.e., NSEG·NBPSCS). In addition to using an adaptive data bus width, the same data on the bus connection from the stream parser 206 to the segment parser 208-1, ..., or 208-N holds stable for two clock cycles for the purpose of avoiding data overrun within a segment parser while maintaining a small rate matching buffer with storage capacity less than NBPSCS bits, which means the rate matching buffer within the segment parser can be as small as 12 bits to support the highest order of modulation defined in WiFi 7, i.e., 4096-QAM.

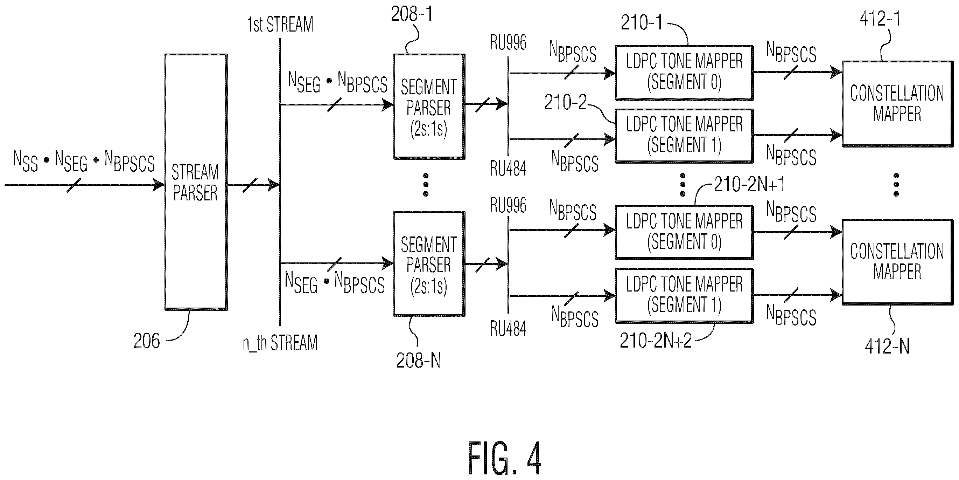

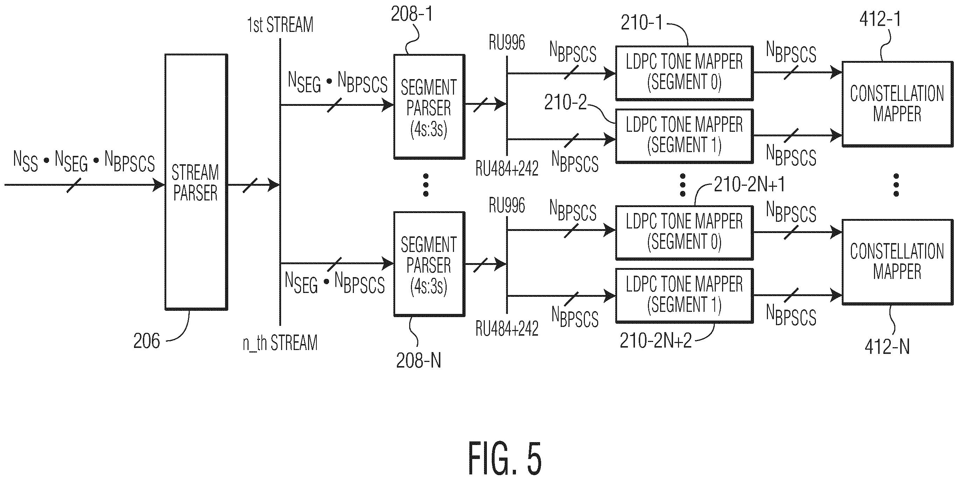

In some embodiments, the segment parser 208-1, ..., or 208-N receives NSEG·NBPSCS bits every two clock cycles from the stream parser 206 and distributes equal number of NBPSCS bits to its downstream LDPC tone mapper 210-1, 210-2, ..., 210-2N+1, or 210-2N+2 on each 80MHz frequency segment even when the number of populated data subcarriers for each 80MHz segment are different for some large MRUs. Figs. 4 and 5 depict the wireless transmitter 200 depicted in Fig. 2 processing two examples of large MRUs. Specifically, Fig. 4 shows the case of a 160MHz signal with an MRU of 996+484-tone that the wireless transmitter 200 depicted in Fig. 2 can process. In the embodiment depicted in Fig. 4, there are a total of two 80MHz frequency segments in the transmitter data path, one segment is allocated with 996 tones (980 data subcarriers + 16 pilot subcarriers) and the other segment is assigned with 484 tones (468 data subcarriers + 16 pilot subcarriers). In some embodiments, according to an IEEE 802.11be standard, the segment parser 208-1, ..., or 208-M distributes a block of NCBPSS data bits per OFDM symbol into the two segments in round robin fashion with m0 bits to segment 0 and m1 bits to segment 1, respectively. In each round, the ratio of m0 and m1 is proportional to the number of data subcarriers within its corresponding segment. In the case of the 996+484-tone MRU, the ratio is roughly but not exactly 2:1. In some embodiments, initially, the data bits are allocated in round robin with 2s bits to segment 0 and 1s bits to segment 1. After the segment with smaller number of valid data subcarrier has been provided with all its data bits for the data symbol, the remaining bits are leftover bits for the segment with more valid tones. In this case, the data bit output rate of segment 0 is about twice as fast as segment 1. The data output bus bit width of segment 0 and segment 1 to the LDPC tone mappers 210-1, 210-2, ..., 210-2N+1, 210-2N+2 are equal to NBPSCS, which equals to 2s in non-BPSK modulation cases, 1s in BPSK modulation case. The output signals from the LDPC tone mappers 210-1, 210-2, ..., 210-2N+1, 210-2N+2 are output to constellation mappers 412-1, ..., 412-N, which may be a part of the wireless transmitter 200 depicted in Fig. 2. Fig. 5 shows the case of a 160MHz signal with an MRU with 996+484+242-tone that the wireless transmitter 200 depicted in Fig. 2 can process. In general, it is similar to the case of the 996+484-tone MRU but with only one difference, i.e., the ratio of bit allocation to each segment during proportional round robin parsing operation, instead of being 2s:1s in Fig. 4, it is 4s:3s in Fig. 5. In the embodiments depicted in Figs. 4 and 5, the segment parser operation is applied to each 80MHz frequency subblock. For a 160MHz transmission with a 996+996-tone RU, a 996+484-tone MRU and a 996+484+242-tone MRU, the output bits of each segment parser 208-1, ..., or 208-N are provided in blocks of NCBPS bits. When the data passed from the stream parser 206 to the segment parser 208-1, ..., or 208-N, the data needs to be distributed by two equal RU sizes for the 996+996-tone RU or by two unequal RU sizes for the 996+484-tone MRU and the 996+484+242-tone MRU. In some embodiments, at least one of the segment parsers 208-1, ..., 208-N (e.g., each segment parser 208-1, ..., or 208-N) includes a counter or a finite state machine (FSM) and a rate matching buffer. In some embodiments, the FSM is configured to control which data (NBPSCS) to be sent to an LDPC tone mapper segment 0 or 1, and which memory address to store the data (NBPSCS). The FSM may be also configured to control the rate matching buffer to store data from the stream parser and send data to an LDPC tone mapper segment 0 or 1. In some embodiments, the rate matching buffer is configured to latch the residual bits at different output rates between an LDPC tone mapper segment 0 and an LDPC tone mapper segment 1.

In some embodiments, the segment parser 208-1, ..., or 208-N includes a controller configured to track a data subcarrier allocation pattern of a multiple resource unit (MRU) and a rate matching buffer configured to balance data throughput based on the data subcarrier allocation pattern of the MRU. In some embodiments, the controller includes a counter or a finite state machine (FSM). In some embodiments, the MRU includes resource units (RUs) of different numbers of data subcarriers. In some embodiments, an MRU is composed of multiple RUs of different sizes. For example, the MRU includes a first RU having 996 data subcarriers and a second RU having 448 data subcarriers or 726 data subcarriers. However, the large-size MRUs are not limited to RU996+484 and RU996+726. The rate matching buffer and the counter or FSM can be used to accommodate all large-size MRUs. In some embodiments, the controller is further configured to distribute data of the MRU to the LDPC tone mappers 210-1, 210-2, ..., or 210-2N+1, 210-2N+2 in a data rate that is determined by a ratio between the numbers of data subcarriers of the RUs in the MRU. In some embodiments, the controller is further configured to control an allocation of data of the MRU to be sent to a respective LDPC tone mapper and to determine a memory address for storing the data of the MRU. In some embodiments, the controller is further configured to control the rate matching buffer to store data from the stream parser 206 and to send stored data to a respective LDPC tone mapper. In some embodiments, the rate matching buffer is further configured to latch or store residual bits at different output rates between LDPC tone mappers. In some embodiments, the rate matching buffer includes a 12-bit rate matching buffer to support up to 4096-QAM. In some embodiments, a 6-bit rate matching buffer is used to support up to 64-QAM.

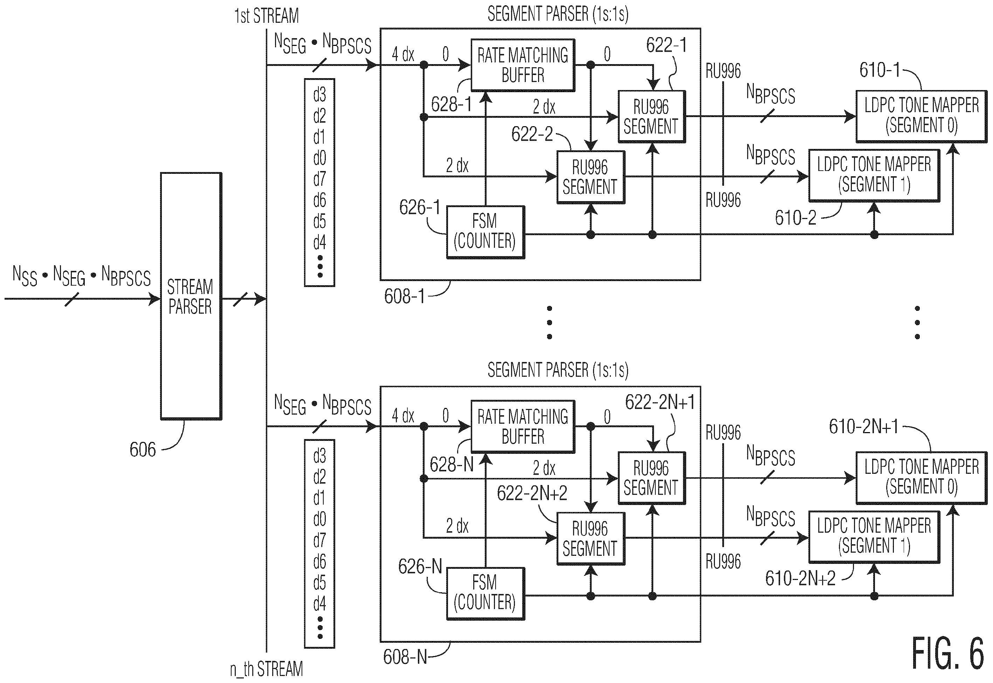

Fig. 6 depicts a stream parser 606, one or more segment parsers 608-1, ..., 608-N, where N is a positive integer, and a number of LDPC tone mappers 610-1, 610-2, ..., 610-2N+1, 610-2N+2 processing an RU of 996+996-tone. The stream parser 606, the segment parsers 608-1, ..., 608-N, and the LDPC tone mappers 610-1, 610-2, ..., 610-2N+1, 610-2N+2 depicted in Fig. 6 are embodiments of the stream parser 206, the segment parsers 208-1, ..., 208-N, the LDPC tone mappers 210-1, 210-2, ..., 210-2N+1, 210-2N+2 of the wireless transmitter 200 depicted in Fig. 2. However, the stream parser 206, the segment parsers 208-1, ..., 208-N, the LDPC tone mappers 210-1, 210-2, ..., 210-2N+1, 210-2N+2 of the wireless transmitter 200 depicted in Fig. 2 are not limited to the embodiments depicted in Fig. 6. In the embodiment depicted in Fig. 6, the segment parser 608-1 includes a finite state machine (FSM) 626-1 and a rate matching buffer 628-1, while the segment parser 608-N includes an FSM 626-N and a rate matching buffer 628-N. In some embodiments, instead of the FSMs, the segment parsers 608-1, ..., 608-N include counters. In the segment parser 608-1, two RU996 segments 622-1, 622-2 represent two RU996 segment output data (2 dx = NBPSCS) that are to be sent to the LDPC tone mapper segment 0 610-1 or the LDPC tone mapper segment 1 610-2 while in the segment parser 608-N, two RU996 segments 622-2N+1, 622-2N+2 represent two RU996 segment output data (2 dx = NBPSCS) that are to be sent to the LDPC tone mapper segment 0 610-2N+1 or the LDPC tone mapper segment 1 610-2N+2. In the embodiment depicted in Fig. 6, the segment parser 608-1, ..., or 608-N distributes two RU996-tone RUs by 1s:1s data rate. In some embodiments, the rate matching buffers 628-1, ..., 628-N are optional because the segment parser input is 4 dx, which can be allocated equally to two RU996-tone RUs by two 2 dx. Assume dx : max(1, NBPSCS/2) bits, x = 0,1,2,3... max(each RU tone number). The stream parser output is 2x NBPSCS bits and a 12-bit rate matching buffer is used if up to 4096QAM is supported. The first stream parser output is put into LSB such that the serial data are {d3,d2,d1,d0,d7,d6,d5,d4,d11,d10,d9,d8... }.

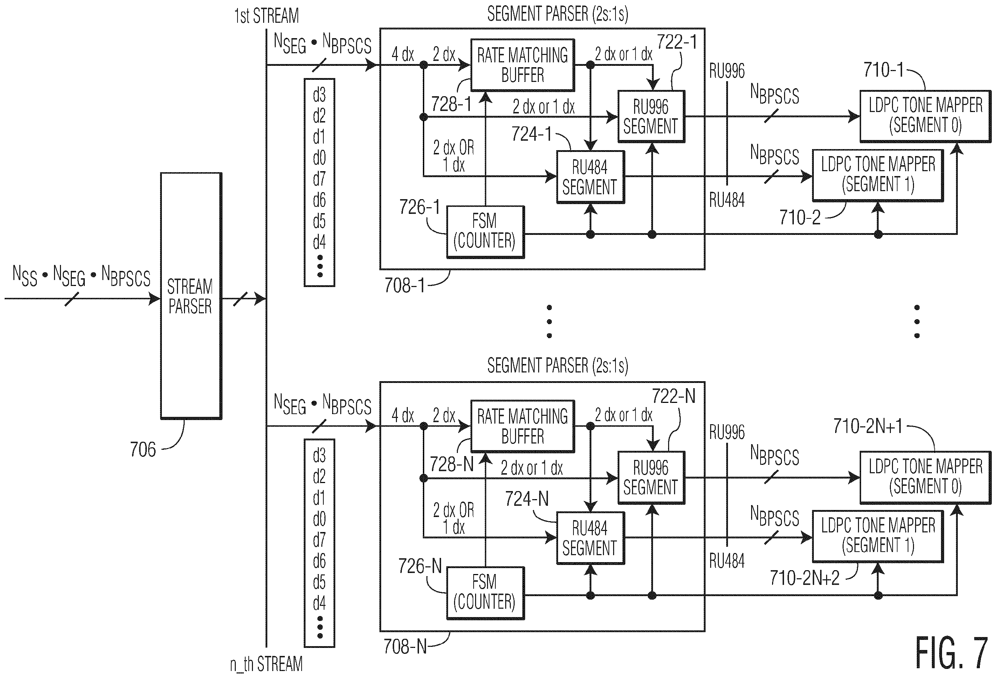

Fig. 7 depicts a stream parser 706, one or more segment parsers 708-1, ..., 708-N, where N is a positive integer, and a number of LDPC tone mappers 710-1, 710-2, ..., 710-2N+1, 710-2N+2 processing an MRU of 996+484-tone. The stream parser 706, the segment parsers 708-1, ..., 708-N, and the LDPC tone mappers 710-1, 710-2, ..., 710-2N+1, 710-2N+2 depicted in Fig. 7 are embodiments of the stream parser 206, the segment parsers 208-1, ..., 208-N, the LDPC tone mappers 210-1, 210-2, ..., 210-2N+1, 210-2N+2 of the wireless transmitter 200 depicted in Fig. 2. However, the stream parser 206, the segment parsers 208-1, ..., 208-N, the LDPC tone mappers 210-1, 210-2, ..., 210-2N+1, 210-2N+2 of the wireless transmitter 200 depicted in Fig. 2 are not limited to the embodiments depicted in Fig. 7. In the embodiment depicted in Fig. 7, the segment parser 708-1 includes a finite state machine (FSM) 726-1 and a rate matching buffer 728-1, while the segment parser 708-N includes an FSM 726-N and a rate matching buffer 728-N. In some embodiments, instead of the FSMs, the segment parsers 708-1, ..., 708-N include counters. In the segment parser 708-1, a RU996 segment 722-1 and a RU484 segment 724-1 represent RU996 segment output data and RU484 segment output data that are to be sent to the LDPC tone mapper segment 0 710-1 or the LDPC tone mapper segment 1 710-2 while in the segment parser 708-N, a RU996 segment 722-N and a RU484 segment 724-N represent RU996 segment output data and RU484 segment output data that are to be sent to the LDPC tone mapper segment 0 710-2N+1 or the LDPC tone mapper segment 1 710-2N+2. Assume that the stream parser output data should be held by at least 2 cycles and each segment parser input is 4 dx in 2 cycles. The segment parser 708-1, ..., or 708-N needs to distribute RU996- and RU484-tone RUs by a 2s:1s data rate, which is not equal, unlike the 996+996-tone RUs in Fig. 6 having equal data rate allocation. In the embodiment depicted in Fig. 7, the rate matching buffers 728-1, ..., 728-N are used to latch the residual bits at different data rates. The input of the rate matching buffer 728-1, ..., or 728-N is the half bits of stream parser output, which is 2dx(NBPSCS) bits and a 12-bit rate matching buffer is used to support up to 4096QAM. The output of the rate matching buffer 728-1, ..., or 728-N is connected to the corresponding RU996 segment 722-1, ..., or 722-N and the corresponding RU484 segment 724-1, ..., or 724-N. The FSM 726-1, ..., or 726-N controls the rate matching buffer 728-1, ..., or 728-N to send 1dx or 2dx or null data to the corresponding RU996 segment 722-1, ..., or 722-N and the corresponding RU484 segment 724-1, ..., or 724-N. In some embodiments, the FSM 726-1, ..., or 726-N controls the rate matching buffer 728-1, ..., or 728-N to send 2dx(NBPSCS) to a corresponding LDPC tone mapper if the rate matching buffer 728-1, ..., or 728-N finishes collecting the 2dx(NBPSCS) data. The input of the RU996 segment 722-1, ..., or 722-N and the RU484 segment 724-1, ..., or 724-N come from the rate matching buffer or the stream parser output and may come (e.g., 1dx) from the stream parser 206 and another may come (e.g., 1dx) from the rate matching buffer, or 2dx all come from the rate matching buffer or the stream parser.

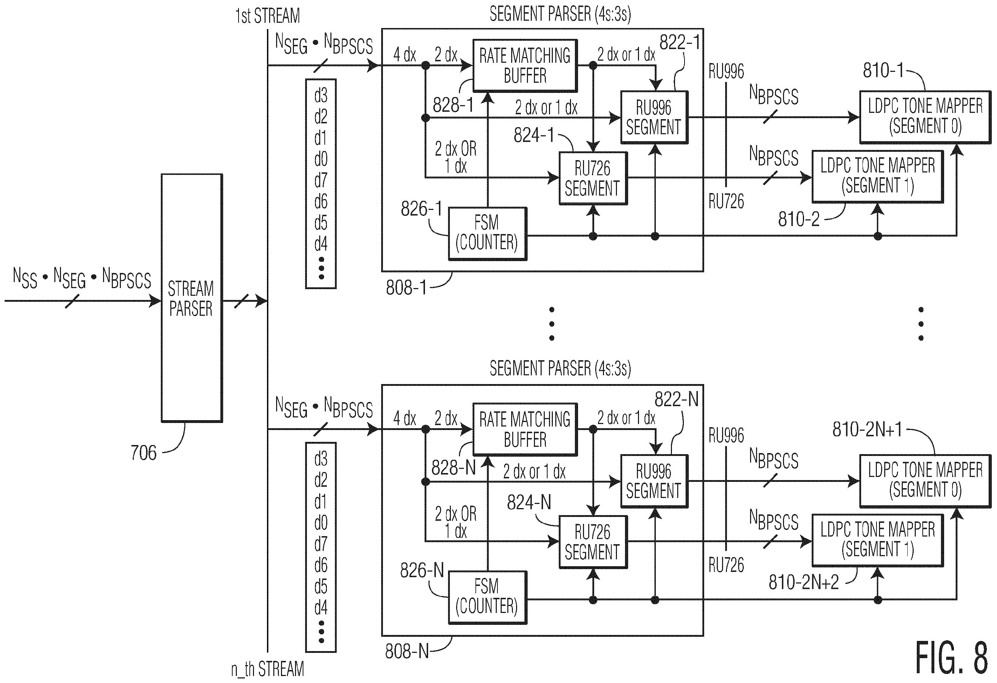

Fig. 8 depicts a stream parser 806, one or more segment parsers 808-1, ..., 808-N, where N is a positive integer, and a number of LDPC tone mappers 810-1, 810-2, ..., 810-2N+1, 810-2N+2 processing an MRU of 996+726-tone. The stream parser 806, the segment parsers 808-1, ..., 808-N, and the LDPC tone mappers 810-1, 810-2, ..., 810-2N+1, 810-2N+2 depicted in Fig. 8 are embodiments of the stream parser 206, the segment parsers 208-1, ..., 208-N, the LDPC tone mappers 210-1, 210-2, ..., 210-2N+1, 210-2N+2 of the wireless transmitter 200 depicted in Fig. 2. However, the stream parser 206, the segment parsers 208-1, ..., 208-N, the LDPC tone mappers 210-1, 210-2, ..., 210-2N+1, 210-2N+2 of the wireless transmitter 200 depicted in Fig. 2 are not limited to the embodiments depicted in Fig. 8. In the embodiment depicted in Fig. 8, the segment parser 808-1 includes a finite state machine (FSM) 826-1 and a rate matching buffer 828-1, while the segment parser 808-N includes an FSM 826-N and a rate matching buffer 828-N. In some embodiments, instead of the FSMs, the segment parsers 808-1, ..., 808-N include counters. In the segment parser 808-1, a RU996 segment 822-1 and a RU726 segment 824-1 represent RU996 segment output data and RU726 segment output data that are to be sent to the LDPC tone mapper segment 0 810-1 or the LDPC tone mapper segment 1 810-2 while in the segment parser 808-N, a RU996 segment 822-N and a RU726 segment /24-N represent RU996 segment output data and RU726 segment output data that are to be sent to the LDPC tone mapper segment 0 810-2N+1 or the LDPC tone mapper segment 1 810-2N+2. Assume that the stream parser output data should be held by at least 2 cycles and each segment parser input is 4 dx in 2 cycles, the segment parser 808-1, ..., or 808-N needs to distribute RU996- and RU484+242-tone RUs by a 4s:3s data rate which is not equal, unlike the 996+996-tone RUs in Fig. 6 having equal data rate allocation. In the embodiment depicted in Fig. 8, the rate matching buffers 828-1, ..., 828-N are used to latch the residual bits at different data rates. The input of the rate matching buffer 828-1, ..., or 828-N is the half bits of stream parser output, which is 2dx(NBPSCS) bits and a 12-bit rate matching buffer is used to support up to 4096QAM. The output of the rate matching buffer 828-1, ..., or 828-N is connected to the corresponding RU996 segment 822-1, ..., or 822-N and the corresponding RU726(RU484+242) segment 824-1, ..., or 824-N. The FSM 826-1, ..., or 826-N controls the rate matching buffer 828-1, ..., or 828-N to send 1dx or 2dx or null data to the corresponding RU996 segment 822-1, ..., or 822-N and the corresponding RU726 segment 824-1, ..., or 824-N. In some embodiments, the FSM 826-1, ..., or 826-N controls the rate matching buffer 828-1, ..., or 828-N to send 2dx(NBPSCS) to a corresponding LDPC tone mapper if the rate matching buffer 828-1, ..., or 828-N finishes collecting the 2dx(NBPSCS) data. The input of the RU996 segment 822-1, ..., or 822-N and the RU726 segment 824-1, ..., or 824-N come from the rate matching buffer or the stream parser output and may come (e.g., 1dx) from the stream parser and another may come (e.g., 1dx) the rate matching buffer, or 2dx all come from the rate matching buffer or the stream parser.

Examples of leftover bits are described as follows. In RU996+RU484 or RU996+RU726, the RU484 or RU726 frequency subblock may reach its full value before the RU996 frequency subblock. At that point, no further bits are output by the segment parser for the RU484 or RU726 subblock. The remaining bits(44*N_{BPSCS}) are sequentially distributed over last 44 tones on the RU996.

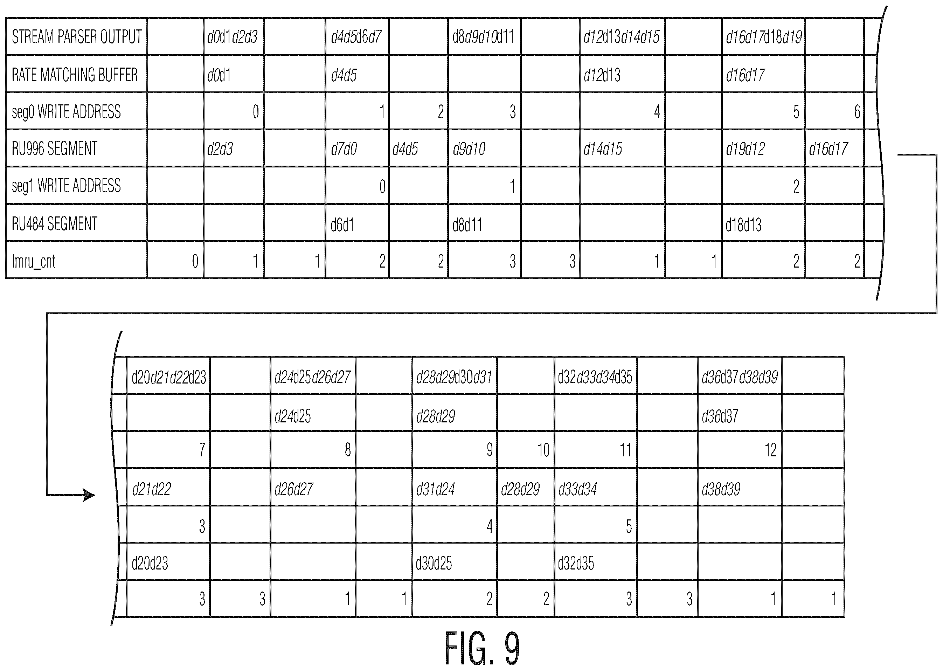

Fig. 9 depicts a table of an example for serial data flow of a RU996+484-tone MRU. As shown in Fig. 9, the data in italic is distributed to the rate matching buffer 726-1, ..., or 726-N or the RU996 segment 722-1, ..., or 722-N and non-italic data is distributed to the rate matching buffer 726-1, ..., or 726-N or the RU484 segment 724-1, ..., or 724-N. The data *d2d3* can be directly sent to the LDPC tone mapper memory of the RU996 segment 722-1, ..., or 722-N by the write address 0. Although d1 belongs to the RU484 segment 724-1, ..., or 724-N, 2dx needs to be collected to be sent to the LDPC tone mapper memory of the RU484 segment 724-1, ..., or 724-N. Although *d0* belongs to the RU996 segment 722-1, ..., or 722-N, 2dx needs to be collected to send it to the LDPC tone mapper memory of the RU996 segment 722-1, ..., or 722-N. Therefore, *d0*d1 is stored in the rate matching buffer 726-1, ..., or 726-N first. In the 3^{rd} clock cycle, *d4d5*d6*d7* is received from the stream parser 206 and *d0*d1 is in the rate matching buffer 726-1, ..., or 726-N such that *d7d0* can be sent to the LDPC tone mapper memory of the RU996 segment 722-1, ..., or 722-N by the write address 1 and d6d1 can be sent to the LDPC tone mapper memory of the RU484 segment 724-1, ..., or 724-N by the write address 0. Some examples of counter (FSM) operation are described as follows. For any stream of a RU996+484-tone, the following timing plan can be used to implement the segment parser 708-1, ..., or 708-N. Because the separated data rate is 2s:1s (2+1=3), at least 2-bit counter is used. Assume dx : max(1, N_{BPSCS}/2) bits, x = 0,1,2,3... max(each RU tone number). The stream parser output is 2x N_{BPSCS} bits and a 12-bit rate matching buffer is used if up to 4096QAM needs to be supported. The first stream parser output is output into least significant bit (LSB) such that the serial data are {d3,d2,d1,d0,d7,d6,d5,d4,d11,d10,d9,d8... }, as above. For example, when large MRU count Lmru_cnt = 1, the rate matching buffer 726-1, ..., or 726-N latches the first half of the total bits output by the stream parser until the leftover bits, the RU996 segment 722-1, ..., or 722-N latches the last half of the total bits output by the stream parser until the leftover bits, and the RU484 segment 724-1, ..., or 724-N is idle. When Lmru_cnt = 2 and the stream parser has output changed, the rate matching buffer 726-1, ..., or 726-N latches the last half of the total bits output by the stream parser, the RU996 segment 722-1, ..., or 722-N latches the last quarter of the total bits output by the stream parser and the first half of the total bits output by the rate matching buffer until the leftover bits, the RU484 segment 724-1, ..., or 724-N latches the second last quarter of the total bits output by the stream parser and the last half of the total bits output by the rate matching buffer 726-1, ..., or 726-N until the leftover bits. When Lmru_cnt = 2 and the stream parser 206 holds, the rate matching buffer 726-1, ..., or 726-N is idle, the RU996 segment 722-1, ..., or 722-N latches the total bits output by the rate matching buffer 726-1, ..., or 726-N until the leftover bits, and the RU484 segment 724-1, ..., or 724-N is idle. When Lmru_cnt = 3, the rate matching buffer 726-1, ..., or 726-N is idle, the RU996 segment 722-1, ..., or 722-N latches the middle half of the total bits output by the stream parser 206 until the leftover bits, the RU484 segment 724-1, ..., or 724-N latches the first quarter of the total bits output by the stream parser 206 and the last quarter of the total bits output by the stream parser 206 until the leftover bits. This method can be expanded to any stream of RU996+484-tone RU. In some embodiments, idle in the above stage means retaining the data.

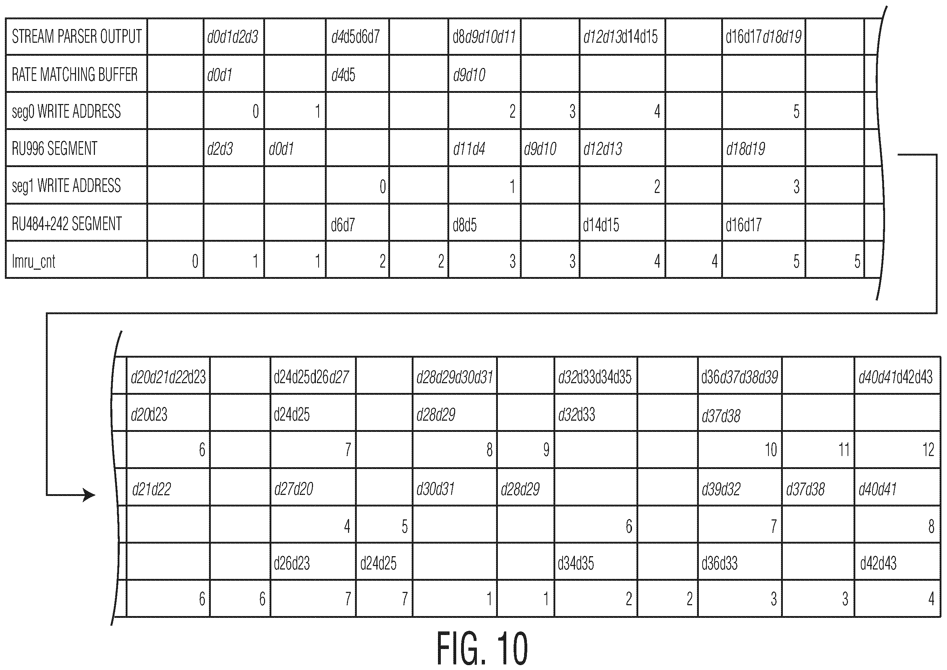

Fig. 10 depicts a table of an example for serial data flow of a RU996+484+242-tone MRU. As shown in Fig. 10, the data in italic is distributed to the rate matching buffer 826-1, ..., or 826-N or the RU996 segment 822-1, ..., or 822-N and non-italic data is distributed to the rate matching buffer 826-1, ..., or 826-N or the RU726 segment 824-1, ..., or 824-N. In the 1^{st} clock cycle, data *d0d1d2d3* is received from the stream parser 206, *d2d3* can be directly sent to the LDPC tone mapper memory of the RU996 segment 822-1, ..., or 822-N by the write address 0. However, *d0d1* needs to be stored in the rate matching buffer 826-1, ..., or 826-N because the LDPC tone mapper memory only receives 2dx(N_{BPSCS}) at a time. Consequently, in the 2^{nd} clock cycle, *d0d1* can be directly sent to the LDPC tone mapper memory of the RU996 segment 822-1, ..., or 822-N by the write address 1. In the 3^{rd} clock cycle, *d4*d5d6d7 is received from the stream parser and *d0d1* is in the rate matching buffer 826-1, ..., or 826-N such that d6d7 can be sent to the LDPC tone mapper memory of the RU726 segment 824-1, ..., or 824-N by the write address 0 directly. Although d5 belongs to the RU726 segment 824-1, ..., or 824-N and *d4* belongs to the RU996 segment 822-1, ..., or 822-N, 2dx(N_{BPSCS}) needs to be collected to send it to each LDPC tone mapper memory. Therefore, *d4*d5 is stored in the rate matching buffer 826-1, ..., or 826-N. In the 5^{th} clock cycle, d8*d9d10d11* is received from the stream parser 206 and have *d4*d5 in the rate matching buffer 826-1, ..., or 826-N such that *d11d4* can be sent to the LDPC tone mapper memory of the RU996 segment 822-1, ..., or 822-N by the write address 2 and d8d5 is sent to LDPC tone mapper memory of RU726 segment 824-1, ..., or 824-N by the write address 1. Some examples of counter (FSM) operation are described as follows. For any stream RU996+484+242-tone RU, the following timing plan can be used to implement the segment parser 808-1, ..., or 808-N. Because the separated data rate is 4s:3s (4+3=7), at least 3-bit counter is used. The stream parser output data should be held by at least 2 cycles. For example, when Lmru_cnt = 1 and the stream parser has output changed, the rate matching buffer 826-1, ..., or 826-N latches the first half of the total bits output by the stream parser until the leftover bits, the RU996 segment 822-1, ..., or 822-N latches the last half of the total bits output by the stream parser until the leftover bits, and the RU484+242 segment 824-1, ..., or 824-N is idle. When Lmru_cnt = 1 and the stream parser holds, the rate matching buffer 826-1, ..., or 826-N is idle, the RU996 segment 822-1, ..., or 822-N latches the total bits output by the rate matching buffer 826-1, ..., or 826-N until the leftover bits, and the RU484+242 segment 824-1, ..., or 824-N is idle. When Lmru_cnt = 2, the rate matching buffer 826-1, ..., or 826-N latches the first half of the total bits output by the stream parser until the leftover bits, the RU996 segment 822-1, ..., or 822-N is idle, and the RU484+242 segment 824-1, ..., or 824-N latches the last half of the total bits output by the stream parser until the leftover bits. When Lmru_cnt = 3 and the stream parser has output changed, the rate matching buffer 826-1, ..., or 826-N latches the middle half of the total bits output by the stream parser until the leftover bits, the RU996 segment 822-1, ..., or 822-N latches the last quarter of the total bits output by the stream parser and the first half of the total bits output by the rate matching buffer 826-1, ..., or 826-N until the leftover bits, and the RU484+242 segment 824-1, ..., or 824-N latches the first quarter of the total bits output by the stream parser and the last half of the total bits output by the rate matching buffer 826-1, ..., or 826-N until the leftover bits. When Lmru_cnt = 3 and the stream parser holds, the rate matching buffer 826-1, ..., or 826-N is idle, the RU996 segment 822-1, ..., or 822-N latches the total bits output by the rate matching buffer 826-1, ..., or 826-N until the leftover bits, and the RU484+242 segment 824-1, ..., or 824-N is idle. When Lmru_cnt = 4, the rate matching buffer 826-1, ..., or 826-N is idle, the RU996 segment latches the first half of the total bits output by the stream parser until the leftover bits, the RU484+242 segment 824-1, ..., or 824-N latches the last half of the total bits output by the stream parser until the leftover bits. When Lmru_cnt = 5, the rate matching buffer 826-1, ..., or 826-N is idle, the RU996 segment 822-1, ..., or 822-N latches the last half of the total bits output by the stream parser until the leftover bits, and the RU484+242 segment 824-1, ..., or 824-N latches the first half of the total bits output by the stream parser until the leftover bits. When Lmru_cnt = 6, the rate matching buffer 826-1, ..., or 826-N latches the first quarter of the total bits output by the stream parser and the last quarter of the total bits output by the stream parser until the leftover bits, the RU996 segment 822-1, ..., or 822-N latches the middle half of the total bits output by the stream parser until the leftover bits, and the RU484+242 segment 824-1, ..., or 824-N is idle. When Lmru_cnt = 7 and the stream parser has output changed, the rate matching buffer 826-1, ..., or 826-N latches the first half of the total bits output by the stream parser until the leftover bits, the RU996 segment 822-1, ..., or 822-N latches the last quarter of the total bits output by the stream parser and the first half of the total bits output by the rate matching buffer 826-1, ..., or 826-N until the leftover bits, and the RU484+242 segment 824-1, ..., or 824-N latches the second last quarter of the total bits output by the stream parser and the last half of the total bits output by the rate matching buffer 826-1, ..., or 826-N until the leftover bits. When Lmru_cnt = 7 and the stream parser holds, the rate matching buffer 826-1, ..., or 826-N and the RU996 segment 822-1, ..., or 822-N are idle, the RU484+242 segment 824-1, ..., or 824-N latches the total bits output by the rate matching buffer 826-1, ..., or 826-N. This method can be expanded to any stream of RU996+484+242-tone RU. In some embodiments, idle in the above stage means retaining the data.

Some examples of buffer size determination are described as follows. In order to make each segment can get 2 dx bits once and write into tone map buffer(or interleaver memory), the data from the stream parser 206 needs to be latched because of the two different ratios to the number of occupied data subcarriers in each 80MHz frequency subblock. In some embodiments, if the two segment rate ratios are the same, a rate matching buffer (e.g., the rate matching buffer 626-1, ..., or 626-N depicted in Fig. 6) is optional. dx : max(1, N_{BPSCS}/2) bits, x = 0,1,2,3... max(each RU tone number). In some embodiments, the size of a rate matching buffer (e.g., the rate matching buffer 726-1, ..., or 726-N depicted in Fig. 7 or the rate matching buffer 826-1, ..., or 826-N depicted in Fig. 8) is determined by 2 dx bits. For example, if up to 4096(4k)-QAM needs to be supported, the rate matching buffer size is 2*6 = 12 bits.

Some examples of addressing schemes of a rate matching buffer (e.g., the rate matching buffer 726-1, ..., or 726-N depicted in Fig. 7 or the rate matching buffer 826-1, ..., or 826-N depicted in Fig. 8) are described as follows. For RU996+RU484, a rate matching buffer (e.g., the rate matching buffer 726-1, ..., or 726-N depicted in Fig. 7) always latches the first half of the total bits output by the stream parser 206. The rate matching buffer latches the stream parser output twice, then skips once and continues looping this action until the leftover bits. For RU996+RU484+RU242 buffer (e.g., the rate matching buffer 826-1, ..., or 826-N depicted in Fig. 8), there are 7 actions and continues looping this action until the leftover bits:
1. The rate matching buffer (e.g., the rate matching buffer 826-1, ..., or 826-N depicted in Fig. 8)latches the first half of the 1^{st} total bits output by the stream parser.
2. The rate matching buffer latches the first half of the 2^{nd} total bits output by the stream parser.
3. The rate matching buffer latches the middle half of the 3^{rd} total bits output by the stream parser.
4. The rate matching buffer skips the 4^{th} total bits output by the stream parser.
5. The rate matching buffer skips the 5^{th} total bits output by the stream parser.
6. The rate matching buffer latches the first quarter of the 6^{th} total bits output by the stream parser and the 6^{th} last quarter of the total bits output by the stream parser.
7. The rate matching buffer latches the first half of the total bits output by the stream parser.

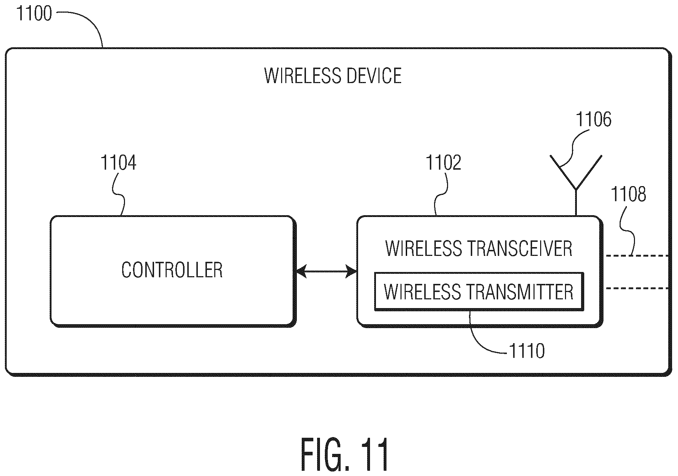

Fig. 11 depicts a wireless device 1100 in accordance with an embodiment of the invention. The wireless device 1100 may be an embodiment of an AP or a STA. In the embodiment depicted in Fig. 11, the wireless device 1100 includes a wireless transceiver 1102, a controller 1104 operably connected to the wireless transceiver, and at least one antenna 1106 operably connected to the wireless transceiver. In some embodiments, the wireless device 1100 may include at least one optional network port 1108 operably connected to the wireless transceiver. In some embodiments, the wireless transceiver includes a physical layer (PHY) device. The wireless transceiver may be any suitable type of wireless transceiver. For example, the wireless transceiver may be a LAN transceiver (e.g., a transceiver compatible with an IEEE 802.11 protocol (e.g., an IEEE 802.11be protocol)). In some embodiments, the wireless device 1100 includes multiple transceivers. The controller may be configured to control the wireless transceiver to process packets received through the antenna and/or the network port and/or to generate outgoing packets to be transmitted through the antenna and/or the network port. In some embodiments, the controller is implemented within a processor, such as a microcontroller, a host processor, a host, a DSP, or a CPU. The antenna may be any suitable type of antenna. For example, the antenna may be an induction type antenna such as a loop antenna or any other suitable type of induction type antenna. However, the antenna is not limited to an induction type antenna. The network port may be any suitable type of port. The wireless device 1100 may be compatible with an IEEE 802.11 protocol (e.g., an IEEE 802.11be protocol).

In the embodiment depicted in Fig. 11, the wireless transceiver 1102 includes a wireless transmitter 1110, which may be an embodiment of the wireless transmitter 200 depicted in Fig. 2. However, the wireless transmitter 200 depicted in Fig. 2 is not limited to the embodiments depicted in Fig. 11. In accordance with an embodiment of the invention, the wireless transmitter includes scramblers configured to perform scramble operations on input data to generate scrambled input data, at least one low-density parity-check (LDPC) encoder configured to perform an encoding operation on the scrambled input data to generated encoded data, a bit alignment unit configured to perform a bit alignment operation on the encoded data to generate aligned data, a stream parser configured to perform a stream parser operation on the aligned data to generate data streams, segment parsers, and LDPC tone mappers. In some embodiments, at least one of the segment parsers includes a counter or an FSM configured to track a data subcarrier allocation pattern of a multiple resource unit (MRU) that correspond to the data streams and a rate matching buffer configured to balance data throughput based on the data subcarrier allocation pattern of the MRU. The LDPC tone mappers may be configured to perform a tone mapping operation based on the data throughput from the segment parsers. In some embodiments, the wireless transmitter is compatible with an Institute of Electrical and Electronics Engineers (IEEE) 802.11 protocol. In some embodiments, the MRU includes resource units (RUs) of different numbers of data subcarriers. For example, the MRU includes a first RU having 996 data subcarriers and a second RU having 448 data subcarriers or 726 data subcarriers. In some embodiments, at least one of the segment parsers (e.g., a counter or an FSM of the segment parser) is further configured to distribute data of the MRU to the LDPC tone mappers in a data rate that is determined by a ratio between the numbers of data subcarriers of the RUs in the MRU. In some embodiments, at least one of the segment parsers (e.g., a counter or an FSM of the segment parser) is further configured to control an allocation of data of the MRU to be sent to a respective LDPC tone mapper and to determine a memory address for storing the data of the MRU. In some embodiments, at least one of the segment parsers (e.g., a counter or an FSM of the segment parser) is further configured to control the rate matching buffer to store data from a stream parser and to send stored data to a respective LDPC tone mapper. In some embodiments, the rate matching buffer is further configured to latch residual bits at different output rates between the LDPC tone mappers. In some embodiments, the rate matching buffer includes a 12-bit rate matching buffer to support up to 4096 quadrature amplitude modulation (QAM).

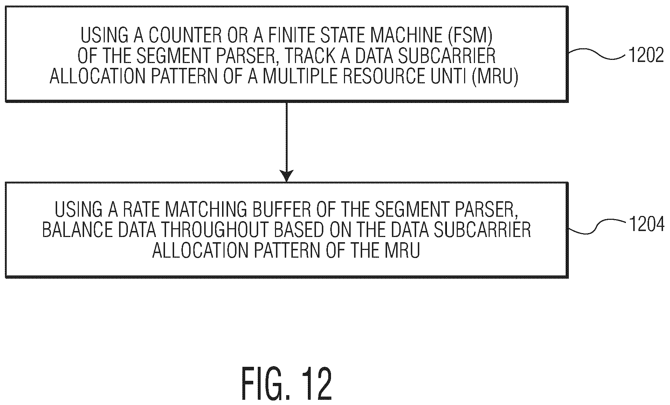

Fig. 12 is a process flow diagram of a method of operating a segment parser in accordance with an embodiment of the invention. At block 1202, using a counter or a finite state machine (FSM) of the segment parser, a data subcarrier allocation pattern of a multiple resource unit (MRU) is tracked. At block 1204, using a rate matching buffer of the segment parser, data throughput is balanced based on the data subcarrier allocation pattern of the MRU. In some embodiments, the segment parser is included in a wireless transmitter of a wireless device. In some embodiments, the wireless device is compatible with an Institute of Electrical and Electronics Engineers (IEEE) 802.11 protocol. In some embodiments, the MRU includes resource units (RUs) of different numbers of data subcarriers. In some embodiments, the MRU includes a first RU having 996 data subcarriers and a second RU having 448 data subcarriers or 726 data subcarriers. In some embodiments, data of the MRU is distributed to low-density parity-check (LDPC) tone mappers in a data rate that is determined by a ratio between the numbers of data subcarriers of the RUs in the MRU. In some embodiments, an allocation of data of the MRU to be sent to a respective low-density parity-check (LDPC) tone mapper is controlled and a memory address for storing the data of the MRU is determined. In some embodiments, the rate matching buffer is controlled to store data from a stream parser and to send stored data to a respective LDPC tone mapper. In some embodiments, the rate matching buffer latches residual bits at different output rates between LDPC tone mappers. In some embodiments, the rate matching buffer includes a 12-bit rate matching buffer to support up to 4096 quadrature amplitude modulation (QAM). The segment parser may be the same as or similar to the segment parsers 208-1, ..., 208-N depicted in Figs. 2, 4, and 5, the segment parsers 608-1, ..., 608-N depicted in Fig. 6, the segment parsers 708-1, ..., 708-N depicted in Fig. 7, and/or the segment parsers 808-1, ..., 808-N depicted in Fig. 8. The counter or the FSM may be the same as or similar to the FSMs 626-1, ..., 626-N depicted in Fig. 6, the FSMs 726-1, ..., 726-N depicted in Fig. 7, and/or the FSMs 826-1, ..., 826-N depicted in Fig. 8. The rate matching buffer may be the same as or similar to the rate matching buffers 628-1, ..., 628-N depicted in Fig. 6, the rate matching buffers 728-1, ..., 728-N depicted in Fig. 7, and/or the rate matching buffers 828-1, ..., 828-N depicted in Fig. 8.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A segment parser comprising:
a controller configured to track a data subcarrier allocation pattern of a multiple resource unit, MRU; and
a rate matching buffer configured to balance data throughput based on the data subcarrier allocation pattern of the MRU.

2. The segment parser of claim 1, wherein the segment parser is included in a wireless transmitter of a wireless device.

3. The segment parser of claim 2, wherein the wireless device is compatible with an Institute of Electrical and Electronics Engineers, IEEE, 802.11 protocol.

4. The segment parser of any preceding claim, wherein the controller comprises a counter.

5. The segment parser of any preceding claim, wherein the controller comprises a finite state machine, FSM.

6. The segment parser of any preceding claim, wherein the MRU comprises a plurality of resource units, RUs of different numbers of data subcarriers.

7. The segment parser of claim 6, wherein the MRU comprises a first RU having 996 data subcarriers and a second RU having 448 data subcarriers or 726 data subcarriers.

8. The segment parser of claim 6 or 7, wherein the controller is further configured to distribute data of the MRU to a plurality of low-density parity-check, LDPC, tone mappers in a data rate that is determined by a ratio between the numbers of data subcarriers of the RUs in the MRU.

9. The segment parser of any preceding claim, wherein the controller is further configured to control an allocation of data of the MRU to be sent to a respective low-density parity-check, LDPC, tone mapper and to determine a memory address for storing the data of the MRU.

10. The segment parser of any preceding claim, wherein the controller is further configured to control the rate matching buffer to store data from a stream parser and to send stored data to a respective low-density parity-check, LDPC, tone mapper.

11. The segment parser of any preceding claim, wherein the rate matching buffer is further configured to latch a plurality of residual bits at different output rates between a plurality of low-density parity-check, LDPC, tone mappers.

12. The segment parser of any preceding claim, wherein the rate matching buffer comprises a 12-bit rate matching buffer to support up to 4096 quadrature amplitude modulation, QAM.

13. A wireless transmitter comprising:
a plurality of scramblers configured to perform a plurality of scramble operations on input data to generate scrambled input data;
at least one low-density parity-check, LDPC encoder configured to perform an encoding operation on the scrambled input data to generated encoded data;
a bit alignment unit configured to perform a bit alignment operation on the encoded data to generate aligned data;
a stream parser configured to perform a stream parser operation on the aligned data to generate a plurality of data streams;
a plurality of segment parsers, wherein at least one of the segment parsers comprises a controller as claimed in any preceding claim wherein the data subcarrier allocation pattern corresponds to the data stream; and
a plurality of LDPC tone mappers configured to perform a tone mapping operation based on the data throughput from the segment parsers.

14. The wireless transmitter of claim 13, wherein the wireless transmitter is compatible with an Institute of Electrical and Electronics Engineers, IEEE, 802.11 protocol.

15. A method for operating a segment parser, the method comprising:
using a counter or a finite state machine, FSM, of the segment parser, tracking a data subcarrier allocation pattern of a multiple resource unit, MRU; and
using a rate matching buffer of the segment parser, balancing data throughput based on the data subcarrier allocation pattern of the MRU.
